(19) **Europäisches Patentamt**

**European Patent Office**

**Office européen des brevets**

(11) **EP 0 825 156 B1**

(12) **EUROPEAN PATENT SPECIFICATION**

(45) Date of publication and mention
of the grant of the patent:
**27.06.2001 Bulletin 2001/26**

(51) Int Cl.[7]: **C03C 3/087**, C03C 4/02,
C03C 4/08

(21) Application number: **97113977.9**

(22) Date of filing: **13.08.1997**

(54) **Ultraviolet/infrared absorbent low transmittance glass**

Ultraviolett/Infrarot absorbierendes Glas mit niedriger Durchlässigkeit

Verre à faible transmission absorbant les rayonnements ultraviolets/infrarouges

(84) Designated Contracting States:
**DE FR GB IT**

(30) Priority: **21.08.1996 JP 21961696**
**11.07.1997 JP 18637497**

(43) Date of publication of application:
**25.02.1998 Bulletin 1998/09**

(73) Proprietor: **NIPPON SHEET GLASS CO. LTD.**
**Chuo-ku Osaka-shi Osaka-fu (JP)**

(72) Inventors:
• **Seto, Hiromitsu,**
**c/o Nippon Sheet Glass Co., Ltd.**
**Osaka-shi, Osaka (JP)**
• **Nagashima, Yukihito,**
**c/oNippon Sheet Glass Co.Ltd.**
**Osaka-shi, Osaka (JP)**
• **Kuroda, Isamu, c/oNippon Sheet Glass Co.Ltd.**
**Osaka-shi, Osaka (JP)**
• **Yoshii, Shigekazu**
**Hyogo (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 452 207**         **WO-A-97/17303**
**DE-A- 19 636 303**     **JP-A- 8 245 238**
**US-A- 5 308 805**       **US-A- 5 393 593**
**US-A- 5 545 596**

**Description**

BACKGROUND OF THE INVENTION AND RELATED ART STATEMENT

The present invention relates to an ultraviolet/infrared absorbent low transmittance glass. More particularly, it relates to an ultraviolet/infrared absorbent low transmittance glass which has an almost neutral color such as turquoise blue shade and deep green shade so that it is useful for windows of vehicles or buildings when used in combination with a glass having green shade with high visible light transmittance, and which has low or middle visible light transmittance, low total solar energy transmittance, and low ultraviolet transmittance so that it is suitable for use as privacy glazing of a vehicle.

Recently, a variety of glass with ultraviolet/infrared absorbability to be used as a vehicle windshield has been proposed with the view of preventing degradation of luxurious interior materials and reducing cooling load of the vehicle. In view of privacy protection, glass with relatively low visible light transmittance is preferably used for a rear window glass of a vehicle. Such kinds of glass include the followings.

For example, a dark gray colored infrared absorbent glass disclosed in Japanese Patent Publication No. 7-29813 consists of soda-lime-silica glass including colorants consisting of 1.00 to 1.7 weight percent $Fe_2O_3$ (total iron), at least 0.27 weight percent FeO, 0.002 to 0.005 weight percent Se, and 0.01 to 0.02 weight percent CoO. The glass exhibits luminous transmittance less than 32 percent and total solar infrared transmittance less than 15 percent at 3.9 mm thickness.

A dark gray colored glass disclosed in Japanese Unexamined Published Patent Application No. 8-157232 consists of soda-lime-silica glass including colorants consisting of 0.8 to 1.4 weight percent $Fe_2O_3$ (total iron), less than 0.21 weight percent FeO. 0.05 to 1.0 weight percent $TiO_2$, 0.02 to 0.05 weight percent CoO, and 0.0005 to 0.015 weight percent Se.

A neutral gray colored glass disclosed in claim 25 of U.S. Patent No. 5.393.593 has a base glass composition comprising 66 to 75 weight percent $SiO_2$, 10 to 20 weight percent $Na_2O$. 5 to 15 weight percent CaO, 0 to 5 weight percent MgO, 0 to 5 weight percent $Al_2O_3$, and 0 to 5 weight percent $K_2O$. and colorants consisting of 1.00 to 2.2 weight percent $Fe_2O_3$ (total iron), at least 0.20 weight percent FeO, 0.0005 to 0.005 weight percent Se, and 0.010 to 0.030 weight percent CoO. The glass exhibits luminous transmittance less than 35 percent and total solar infrared transmittance less than 20 percent at 3.9 mm thickness.

A soda-lime-silica glass disclosed in Japanese Publication of PCT No. 8-506314 has a neutral color by including primary iron given by the following expression:

$$FeO \text{ (weight percent)} \geqq 0.007+ \text{(optical concentration -0.036)}/2.3$$

and 0.25 to 1.75 weight percent $Fe_2O_3$ and at least one selected from a group consisting of Se. $Co_3O_4$, $Nd_2O_3$, NiO, MnO. $V_2O_5$, $CeO_2$, $TiO_2$, CuO, and SnO. The glass exhibits luminous transmittance more than 32 percent, ultraviolet transmittance less than 25 percent, direct solar energy transmittance at least 7 percent less than the luminous transmittance, and dominant wavelengths preferably less than 570 nanometers at 4 mm thickness. Certain embodiments thereof may be used as a privacy glazing.

In both the dark gray colored infrared absorbent glass disclosed in Japanese Patent Publication No. 7-29813 and the dark gray colored glass disclosed in Japanese Unexamined Published Patent Application No. 8-157232, a great quantity of Se is used for providing a desirable color. Such a great quantity of Se is unpreferable for the environment because Se has toxicity and is easy to vaporize. The above dark gray glass including 0.05 to 1.0 weight percent $TiO_2$ as an essential component is unpreferable because $TiO_2$ is expensive to increase the batch cost.

The neutral gray colored glass disclosed in U.S. Patent No. 5,393,593 is also unpreferable because of the great content of Se. The great content of FeO is preferable in view of heat ray absorptivity, FeO is on the contrary not preferable because it selectively absorbs infrared ray in a wavelength from 1,000 to 1,200 nanometers so that in case of the glass is produced by a normal melting furnace, it absorbs most efficient portion in flame luminance distribution so as to lower the temperature of bottom base of the furnace and then contribute to various defects.

Though the aforementioned glass with low visible light transmittance is superior in view of privacy protection, an occupant in a vehicle cabin sees outside quite unclearly through the glass. On the other hand. a glass with middle transmittance can be sufficient to some extent for both privacy protection and safety. These types of glass are chosen according to positions in a vehicle and circumferences.

The aforementioned glass includes selenium in high concentration to provide optical properties. without essentially including nickel.

The glass of Japanese Publication PCT No. 8-506314, which can be used for privacy glazing, is provided with a neutral color by including colorants consisting all of nickel, selenium, and cobalt, just as described in this specification. flowever. it is necessary to add a great quantity of Se since the content of nickel is low.

US-A-5545596 discloses a color glass composition comprising a base glass components corresponding to the ones according to the present invention and consisting essential of as coloring agents: $Fe_2O_3$ (total iron) from 0.5 to 1.5%, with FeO content representing from 16 to 55% of the total iron content expressed in the form of $Fe_2O_3$, CoO from 0.003 to 0.015%, $Cr_2O_3$ from 0.025 to 0.09% and Se from 0 to 0.0025%.

WO-A-9717303 discloses a soda-lime-silica glass composition comprising, as coloring agents, 0.5 to 2% $Fe_2O_3$ with a ferrous ratio of 15 to 50%, more than 1.0 to 3.0% of $TiO_2$, 0.0003 to 0.02% of CoO, 0 to 0.0008% of Se, 0 to 0.05% $Cr_2O_3$, 0 to 0.05% of $V_2O_5$ and 0 to 0.05% $CeO_2$.

US-A-5,308,805 discloses a soda-lime-silica glass having a base glass composition and colorants consisting essentially of from about 1.3 to 2 wt% $Fe_2O_3$ (total iron), from about 0.01 to 0.05 wt% NiO, from about 0.02 to 0.04 wt% $Co_3O_4$ and from 0.0002 to 0.003 wt% Se, and having a ferrous value in the range of 18 to 30% . Furthermore, the preferred range for the Se content is 0.001 to 0.002%. Additionally, the Se content disclosed according to the examples is between 0.0014 and 0.002%.

DE-A-19636303 discloses a soda-lime-silica glass composition comprising as coloring agents 0.75 to 1.80% $Fe_2O_3$, 0.004 to 0.018% Co, 0.0003 to 0.004% Se and 0.001 to 0.01% $Cr_2O_3$.

OBJECT AND SUMMARY OF THE INVENTION

It is an object of the present invention to provide a further ultraviolet/infra red absorbent low transmittance glass which has an almost neutral color such as turquoise blue and deep green and which has low or middle visible light transmittance, low ultraviolet transmittance. and low total solar energy transmittance.

The ultraviolet/infrared absorbent low transmittance glass of the present invention consists of a base glass, that is. the major constituents comprising:

65 to 80 wt. % $SiO_2$:
0 to 5 wt. % $Al_2O_3$:
0 to 10 wt. % MgO;
5 to 15 wt. % CaO, wherein the total amount of MgO and CaO is 5 to 15 wt. %;
10 to 18 wt. % $Na_2O$;
0 to 5 wt. % $K_2O$, wherein the total amount of $Na_2O$ and $K_2O$ is 10 to 20 wt. %; and
0 to 5 wt. % $B_2O_3$,

and a colorant including:

1.2 to 2.2 wt. % total iron oxide (T-$Fe_2O_3$) converted to $Fe_2O_3$;
0.001 to 0.03 wt. % CoO; and one or both of 0.0001 to 0.0008 % Se, and
0.003 to 0.2 % NiO,

with the proviso that glasses with more than 1.0 to 3.0 % $TiO_2$ are excluded.

BRIEF DESCRIPTION OF THE DRAWING

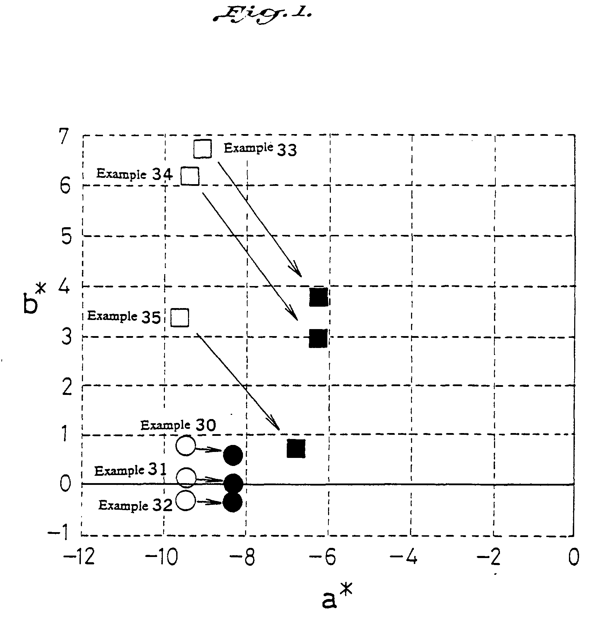

Fig. 1 is a diagram showing changes in color shade during reinforcing process in each example.

PREFERRED EMBODIMENTS

The description will be made as regard to an ultraviolet/infrared absorbent low transmittance glass composition. It should be noted that components will be represented with percentage by weight.

$SiO_2$ (silica) is a principal component for forming skeleton of glass. Less than 65% $SiO_2$ lowers the durability of the glass and more than 80% $SiO_2$ raises the melting temperature of the glass so high.

$Al_2O_3$ is a component for improving the durability of the glass. More than 5% $Al_2O_3$ raises the melting temperature of the glass so high. The preferable range of $Al_2O_3$ is between 0.1% and 2%.

MgO and CaO improve the durability of the glass and adjust a devitrification temperature and viscosity of the glass during molding. More than 10% MgO raises the devitrification temperature. Less than 5% or more than 15% CaO raises the devitrification temperature of the glass. The durability of the glass is lowered when the total amount of MgO and CaO is less than 5%, while the devitrification temperature is increased when the total exceeds 15%.

$Na_2O$ and $K_2O$ prompt the glass to melt. The efficiency of promotion of melting becomes poor when $Na_2O$ is less than 10% or the total of $Na_2O$ and $K_2O$ is less than 10%. while the durability of the glass is lowered when $Na_2O$

exceeds 18% or the total of $Na_2O$ and $K_2O$ exceeds 20%. $K_2O$ is preferable not to exceed 5% because of its expensive cost.

$B_2O_3$ is a component for improving the durability of the glass, prompting to melt, and yet enhancing the ultraviolet absorption. $B_2O_3$ should be less than 5%, since the transmittance is reduced also at a visible range so that the color of the glass is easy to tint yellow and difficulties during molding are caused due to the vaporization of $B_2O_3$ when $B_2O_3$ exceeds 5%.

Iron oxide is present in the form of $Fe_2O_3$ and the form of FeO in the glass. $Fe_2O_3$ is a component for improving the ultraviolet absorptivity and FeO is a component for improving the heat ray absorptivity.

When the total amount of iron oxide calculated as $Fe_2O_3$ (T-$Fe_2O_3$) is less than 1.2%. the efficiency of ultraviolet and infrared absorptivity becomes small so as not to provide desired optical properties. On the other hand. when T-$Fe_2O_3$ exceeds 2.2%. there is an unpreferable possibility that the temperature around a crown of a glass melting furnace exceeds its refractory temperature due to absorption of the heat ray by the ferrous oxide. In addition, in case of successively producing glass by a glass melting furnace with T-$Fe_2O_3$ exceeding 2.2%, long time is required to alter a glass composition in the furnace. T-$Fe_2O_3$ content is preferably equal or more than 1.2% and less than 1.8% (more preferably between 1.25% and 1.35%) or between 1.8% and 2.2%.

Equal or more than 1.2% and less than 1.8% T-$Fe_2O_3$ can offer advantages of small load to the furnace because the glass composition in the succesive glass melting furnace is altered to another composition within a short time. In this case, sufficient efficiency of ultraviolet absorptivity is sometimes not obtained only by iron. However, the efficiency of ultraviolet absorptivity can be improved by adding, for example, $CeO_2$, $TiO_2$ within the ranges defined by the present invention.

Particularly 1.25% to 1.35% T-$Fe_2O_3$ can offer the aforementioned advantages and sufficient efficiency of ultraviolet absorptivity only by iron.

1.8% to 2.2% T-$Fe_2O_3$ makes the time longer to change the glass composition in the furnace, and the load to the furnace becomes greater. However, great efficiency of ultraviolet absorptivity can be obtained with low batch cost.

$Fe_2O_3$ has a function of particularly increasing the absorptivity in ultraviolet range when glass is reinforced by air blast cooling. This means that the glass of this invention can obtain enough efficiency of ultraviolet absorptivity without using expensive ultraviolet absorbent such as $CeO_2$ and $TiO_2$. Then T-$Fe_2O_3$ is in the range mentioned above, the desired color shade of the glass can be obtained after discoloration due to the reinforcement process by air blast cooling.

The ratio (by weight) of FeO/T-$Fe_2O_3$ is preferably between 10% and 40%. When the ratio is less than 10%, enough heat ray absorptivity can not be obtained because of a small amount of FeO.

Then the FeO/T-$Fe_2O_3$ ratio exceeds 40%, the visible light transmittance is reduced and the color is of a blue tint. In addition, nickel sulfide particles are sometimes present in the molten glass because of a great quantity of $Fe^{2+}$ having reducing characteristics in the molten glass. The FeO/T-$Fe_2O_3$ ratio exceeding 40% causes streaks richly including silica and causes silica scum. The FeO/T-$Fe_2O_3$ ratio in a range between 10% and 40% brings a green shade which is an almost neutral color having high ultraviolet absorbability and high heat ray absorptivity. In this case, values converted to $Fe_2O_3$ are used for the content of FeO.

CoO is a component for forming an almost neutral color such as turquoise blue shade and deep green shade by cooperating with Se and/or NiO, and $Fe_2O_3$ and for controlling the visible light transmittance. Less than 0.001% CoO can not form a desired color shade and makes the visible light transmittance too high. More than 0.03% CoO makes the color of too blue tint and reduces the visible light transmittance.

Se contributes a pink color, so that it reduces the excitation purity with the aid of a complementary color of CoO. Then NiO is included, Se may not be always included. More than 0.0008% Se reduces the visible light transmittance. Then using Se, the content thereof is preferable in a range between 0.0001% and 0.0008%, particularly in a range between 0.0001 and 0.0004%. As mentioned, the desired color shade can be obtained with a significantly smaller amount of Se than the amount conventionally required or without Se. It should be noted that the remaining Se in the glass can be increased by setting the content of T-$Fe_2O_3$ and the FeO/T-$Fe_2O_3$ ratio in the aforementioned ranges.

NiO is a component for controlling the visible light transmittance and for reducing the excitation purity as like as CoO. It should be understood that NiO may not be always included when Se is included. Then NiO is more than 0.2%, nickel sulfide stones are sometimes present in the product and the visible light transmittance is reduced. In addition, the obtained shade becomes too greenish. When using NiO, the content thereof is preferably in a range between equal to or more than 0.003% and less than 0.05% for middle visible light transmittance, or in a range between 0.05% and 0.2% for low visible light transmittance.

When the concentration of NiO in the glass is too high, there is a possibility that NiO coagulates to form a nickel sulfide stones. However, when NiO is in the range defined by this invention, the desired color shade can be obtained without producing the nickel sulfide stones.

It is known that the coordination number of NiO varies according to the rate of cooling glass so that the colore of the glass varies. This is because the cooling varies the coordination number of oxide around Ni2+ from 6 into 4 and thus varies the optical absorption. The absorption of $Ni^{2+}$ with 6 coordinating atoms exists around 430 nanometers so as to contribute yellow to the glass, while the absorption of $Ni^{2+}$ with 4 coordinating atoms exists from 500 to 640 nanometers. Therefore, the excitation purity would be reduced to obtain the preferable shade by using $Ni^{2+}$ with 4 coordinating atoms. Windshields of a passenger car are normally reinforced by air blast cooling for safety. The reinforcement process by air blast cooling also varies the coloring condition of NiO. In the present invention, the desired color shade can be obtained without adding Se by the discoloration due to the reinforcement process by air blast cooling.

$CeO_2$ is a component for improving the ultraviolet absorptivity and is present in the form of $Ce^{3+}$ or in the form of $Ce^{4+}$ in glass. Particularly, $Ce^{3+}$ is effective in absorbing ultraviolet with less absorptivity in the visible range. In the present invention. oxide of $Ce^{3+}$ is also expressed in terms of $CeO_2$ and is included in the total amount of $CeO_2$.

$TiO_2$ is a component for improving the ultraviolet absorptivity particularly by interaction with FeO. $TiO_2$ can be added to improve the ultraviolet absorptivity within such a range as not to lose the almost neutral color such as turquoise blue shade and deep green shade, or to add a yellow tint in order to obtain the desired color shade. The use of expensive $CeO_2$. $TiO_2$ increases the cost so that it is not preferable to use more than 2% $CeO_2$, $TiO_2$.

One or more than two among MnO, $V_2O_5$, $MoO_3$, CuO, $Cr2O_3$, and the like may be added as colorant and $SnO_2$ within a rang from 0% to 1% in total may be added as a reducing agent in such a range as not to lose middle transmittance and the almost neutral color such as turquoise blue shade and deep green shade. To further securely prevent the formation of nickel sulfide stones, ZnO may be added in a range from 0% to 1%.

In the present invention, when measured using C.I.E. standard illuminant "A", the total solar energy transmittance (TG) is preferably lower than the visible light transmittance (YA). It is preferable that YA is in a range from 23 to 50% and TG is in a range from 7 to 35% when the measurement is made based on a glass thickness of 4 mm. More preferably. YA is in a range from 25 to 40% and TG is in a range from 20 to 35%. In case of using L* a* b* color system. the chromaticity. expressed by a* and b*, of the glass color are preferably in ranges of -9<a*<-6 and -3<b*<3. respectively.

In the present invention, the glass preferably has YA between 10% and 25% and TG between 10% and 35% at a thickness from 3.1 to 5 mm. In this case. the chromaticity, expressed by a* and b* under L* a* b* color system, of the glass color is preferably in ranges of -7<a*<-2 and -3<b*<7, respectively.

Then measured using C.I.E. standard illuminant "C" over the wavelength range 380 to 770 nanometers, the glass of the present invention preferably has optical properties with dominant wavelengths in the range of 480 to 580 and excitation purity less than 11%.

The glass of the present invention preferably exhibits ultraviolet transmittance, defined by ISO 9050, less than 6%.

[Examples]

Hereinafter, the mode of carrying out the present invention will be described referring to some examples.

(Examples 1 through 33)

Glass raw material is prepared by adding at least one of a group consisting of ferric oxide, titanium oxide, cerium oxide, cobalt oxide, metallic selenium, and nickel oxide into a standard soda-lime-silica glass batch composition, also adding carbonaceous reducing agent (concretely, coke powder etc.) at a ratio of about 0.01 part by weight per 100 parts of the glass raw material therein, and mixing them. The glass raw material thus prepared is heated and melted in an electric furnace at 1500 °C for 4 hours. The molten glass is flowed onto a stainless plate and annealed to the room temperature as long as 16 hours to obtain a 6 mm thick glass plate. The glass plate is then polished in such a manner that the thickness reduces to 4 mm to become a sample. Each sample is measured in the visible light transmittance by the C.I.E illuminant A(YA), the total solar energy transmittance (TG), the ultraviolet transmittance by ISO 9050(TUV). the dominant wavelength by the illuminant C(DW). and the excitation purity (Pe). Before measuring the optical properties, some of the samples are cooled by blasting air after re-heating in order to reinforce them.

Tables 1-4 show base glass compositions of the obtained sample, $T\text{-}Fe_2O_3$ concentration, FeO (converted to $Fe_2O_3$) / $T\text{-}Fe_2O_3$ rate, CoO concentration, Se concentration, NiO concentration, $CeO_2$ concentration, and $TiO_2$ concentration. The numerals in Tables are indicated as a percentage of the weight except that CoO concentration. Se concentration, and NiO concentration are expressed in ppm. The percentages of $SiO_2$ are indicated without figures after decimal points because the figures after decimal points are rounded off. Tables 1-4 also show the optical properties of the respective samples.

All of the samples of Examples 1 through 19 are characterized by visible light transmittance (YA) between 23% and 50%, total solar energy transmittance (TG) between 7% and 30%, and ultraviolet transmittance (TUV) less than 6%. These are also characterized by dominant wavelength (DW) measured using the illuminant C between 480 and 525 nanometers, and excitation purity less than 11%.

It is shown that Examples 2-6, 10, and 11 have the same or improved properties as the glass of Example 1, although these are free of NiO.

The examples 7-9, 12-16 have the same or improved properties as the glass of Example 1, although these are free of Se.

In Examples 2-9, the furnace's load during melting can be reduced because of small amounts of $T\text{-}Fe_2O_3$.

Examples 10-16 have improved ultraviolet absorptivity and improved infrared absorptivity because of large amounts of $T\text{-}Fe_2O_3$.

In order to enhance the ultraviolet absorptivity, relatively large amounts of $TiO_2$ are added in Examples 17-18, and $CeO_2$ is added in Example 19. These examples have large ultraviolet absorptivity without losing the visible light transmittance and total solar ultraviolet transmittance.

Examples 6, 7. and 14 have high visible light transmittance while having high infrared absorptivity and yet have high ultraviolet absorptivity so that these are superior in prevention of degradation of interior materials and reduction of cooling load of the vehicle. Therefore, these are suitable for the privacy protection type of visible light transmission glass, for example. rear windows of vehicles, windows of buildings, and the like.

The ultraviolet absorptivity and the infrared absorptivity of Examples 20-27 are slightly small. These samples contain smaller amount of $T\text{-}Fe_2O_3$ and the $FeO/T\text{-}Fe_2O_3$ ratio is set relatively low, so that they are superior in productivity.

Among these examples, Examples 21-27 have the same or improved properties as the glass of other examples, although these are free of Se.

Example 23 exhibits middle visible light transmittance and low infrared/ultraviolet transmittance.

Examples 24, 26, and 27 exhibit low visible light transmittance and low infrared/ultraviolet transmittance.

Examples show results of measuring optical properties before and after the reinforcement process by air blast cooling.

Among these examples, Examples 28-30 exhibit middle visible light transmittance and low infrared/ultraviolet transmittance and have an almost neutral color such as turquoise blue shade and deep green shade. The ultraviolet transmittance is improved about 1.5% by the reinforcement process.

Examples 31-33 exhibit low visible light transmittance and low infrared/ultraviolet transmittance. The ultraviolet transmittance is improved about 2% by the reinforcement process.

Each of Examples 28-33 has a preferable color shade which is an almost neutral color of gray tint through the reinforcement process. Fig. 1 shows a coordinate diagram of colors indicated by a* ,b* for illustrating how points are moved by the reinforcement process in the aforementioned examples.

It would be apparent from the diagram that all of the points move toward the origin according to the reinforcement process so that the colors become closer to the desired color shade, i.e. almost neutral colors having reduced excitation purity.

Therefore, when the glass compositions of the examples mentioned above are used for windshields of vehicles and windows of building, good effects of preventing degradation of interior materials and of privacy protecting can be expected.

(Comparative Examples 1-4)

Table 5 shows glass components and optical properties of Comparative Examples which are made in the same manner as Examples 1-33 but the glass components are different.

All of Comparative Examples 1-4 have components out of the range of the present invention. Comparative Example 1 contains NiO as a colorant of which amount is out of the claimed range and Comparative Example 2 contains $T\text{-}Fe_2O_3$ of which amount is out of the claimed range. Comparative Example 3 has the same components as the example of Japanese Unexamined Published Patent Application No. H8-157232 as referred above and Comparative Example 4 has the same components as the example of U.S. Patent No. 5,393,593 as referred above. It should be noted that the optical properties of Comparative Example 3 are indicated in values converted based on a glass thickness of 5 mm and the optical properties of Comparative Example 4 are indicated in values converted based on a glass thickness of 3.9 mm.

It would be apparent from Table 5 that as compared with the examples of the present invention. Comparative Examples 1 and 2 do not have an almost neutral color such as turquoise blue shade and deep green shade and yet do not exhibit low or middle visible light transmittance, low infrared transmittance. and low ultraviolet transmittance. Comparative Examples 3 and 4 are not preferable in view of productivity and environment because large amounts of expensive and poisonous Se are used therein.

As detailed above, according to the present invention, an ultraviolet/infrared absorbent low transmittance glass, which exhibits low or middle visible light transmittance, low total solar energy transmittance, and low ultraviolet transmittance and which has an almost neutral color such as turquoise and deep green, can be provided.

The ultraviolet/infrared absorbent low transmittance glass having the almost neutral color such as turquoise and deep green can exhibit the effect of preventing degradation and discoloration of interior materials and the privacy protecting effect when the glass is used for a rear window glass of a vehicle. a window of a building, or the like.

[Table 1]

| Example | 1 | 2 | 3 | 4 | 5 | 6 | 7 | 8 | 9 | 11 | 12 |
|---|---|---|---|---|---|---|---|---|---|---|---|
| $SiO_2$ | 71 | 71 | 71 | 71 | 71 | 71 | 71 | 71 | 71 | 71 | 71 |
| $Al_2O_3$ | 1.6 | 1.6 | 1.6 | 1.6 | 1.6 | 1.6 | 1.6 | 1.6 | 1.6 | 1.6 | 1.6 |
| $MgO$ | 3.6 | 3.6 | 3.6 | 3.6 | 3.6 | 3.6 | 3.6 | 3.6 | 3.6 | 3.6 | 3.6 |
| $CaO$ | 7.7 | 7.7 | 7.7 | 8.4 | 7.7 | 7.7 | 7.7 | 7.7 | 7.7 | 7.7 | 7.7 |
| $Na_2O$ | 13.7 | 13.7 | 13.7 | 13.1 | 13.7 | 13.7 | 13.7 | 13.7 | 13.7 | 13.7 | 13.7 |
| $K_2O$ | 0.9 | 0.9 | 0.9 | 0.9 | 0.9 | 0.9 | 0.9 | 0.9 | 0.9 | 0.9 | 0.9 |
| $B_2O_3$ | — | 0.2 | — | — | — | — | — | — | — | — | — |
| $T-Fe_2O_3$ | 1.9 | 1.3 | 1.7 | 1.5 | 1.4 | 1.4 | 1.7 | 1.5 | 1.4 | 1.9 | 1.8 |
| $FeO/T-Fe_2O_3$ | 0.24 | 0.28 | 0.24 | 0.24 | 0.25 | 0.27 | 0.26 | 0.24 | 0.26 | 0.20 | 0.23 |
| $CeO_2$ | — | — | — | — | — | — | — | — | — | — | — |
| $TiO_2$ | 0.03 | 0.03 | 0.03 | 0.03 | 0.03 | 0.03 | 0.03 | 0.03 | 0.03 | 0.03 | 0.03 |
| Se (ppm) | 3 | 5 | 2 | 3 | 4 | 3 | — | — | — | 3 | 1 |
| CoO (ppm) | 100 | 95 | 113 | 107 | 101 | 92 | 94 | 96 | 98 | 125 | 119 |
| NiO (ppm) | 30 | — | — | — | — | — | 150 | 200 | 250 | — | — |
| YA | 30.8 | 38.2 | 34.1 | 35.1 | 37.0 | 36.2 | 35.4 | 38.2 | 37.5 | 33.1 | 32.9 |
| TG | 18.7 | 23.5 | 20.6 | 21.7 | 23.3 | 20.0 | 19.7 | 23.4 | 23.3 | 20.6 | 19.5 |
| Tuv (ISO) | 1.9 | 5.7 | 2.8 | 3.4 | 4.4 | 5.1 | 3.0 | 4.6 | 5.5 | 1.7 | 2.1 |
| dominant wavelength Dw | 519 | 492 | 494 | 496 | 495 | 498 | 499 | 498 | 497 | 499 | 495 |
| excitation purity Pe | 4.5 | 7.4 | 7.7 | 5.9 | 6.0 | 7.1 | 6.8 | 6.7 | 6.8 | 6.2 | 8.2 |

EP 0 825 156 B1

[Table 2]

| Example | 12 | 13 | 14 | 15 | 16 | 17 | 18 | 19 |
|---|---|---|---|---|---|---|---|---|
| SiO$_2$ | 70 | 70 | 70 | 70 | 70 | 71 | 71 | 70 |
| Al$_2$O$_3$ | 1.6 | 1.6 | 1.6 | 1.6 | 1.6 | 1.6 | 1.6 | 1.6 |
| MgO | 3.6 | 3.6 | 3.6 | 3.6 | 3.6 | 3.6 | 3.6 | 3.6 |
| CaO | 7.7 | 8.4 | 8.4 | 8.4 | 8.4 | 8.4 | 8.4 | 8.4 |
| Na$_2$O | 13.7 | 13.1 | 13.1 | 13.1 | 13.1 | 13.1 | 13.1 | 13.1 |
| K$_2$O | 0.9 | 0.9 | 0.9 | 0.9 | 0.9 | 0.9 | 0.9 | 0.9 |
| B$_2$O$_3$ | — | — | — | — | 0.6 | — | — | — |
| T-Fe$_2$O$_3$ | 2.2 | 2.2 | 1.9 | 1.8 | 1.3 | 1.3 | 1.5 | 1.3 |
| FeO/T-Fe$_2$O$_3$ | 0.34 | 0.30 | 0.24 | 0.22 | 0.31 | 0.28 | 0.29 | 0.40 |
| CeO$_2$ | — | — | — | — | — | — | — | 1 |
| TiO$_2$ | 0.03 | 0.03 | 0.03 | 0.03 | 0.5 | 0.5 | 0.5 | 0.03 |
| Se (ppm) | — | — | — | — | — | 5 | — | — |
| CoO (ppm) | 98 | 100 | 90 | 92 | 130 | 95 | 75 | 75 |
| NiO (ppm) | 300 | 300 | 50 | 100 | 300 | — | 500 | 500 |
| others | | | | | | | | |
| YA | 23.0 | 23.2 | 35.6 | 37.7 | 31.9 | 38.0 | 30.4 | 30.4 |
| TG | 10.2 | 11.1 | 19.3 | 21.8 | 20.5 | 23.2 | 15.4 | 15.4 |
| Tuv (ISO) | 0.9 | 1.0 | 1.9 | 2.6 | 4.0 | 3.7 | 3.9 | 3.9 |
| dominant wavelength D$_w$ | 511 | 517 | 499 | 500 | 497 | 516 | 520 | 514 |
| excitation purity Pe | 7.3 | 6.6 | 7.4 | 6.6 | 7.5 | 4.1 | 8.3 | 8.3 |

9

[Table 3]

| Example | 20 | 21 | 22 | 23 | 24 | 25 | 26 | 27 |
|---|---|---|---|---|---|---|---|---|
| $SiO_2$ | 71 | 71 | 71 | 70 | 71 | 71 | 71 | 71 |
| $Al_2O_3$ | 1.6 | 1.6 | 1.6 | 1.6 | 1.6 | 1.6 | 1.6 | 1.6 |
| MgO | 3.6 | 3.6 | 3.6 | 3.6 | 3.6 | 3.6 | 3.6 | 3.6 |
| CaO | 7.7 | 7.7 | 7.7 | 7.7 | 7.7 | 7.7 | 7.7 | 7.7 |
| $Na_2O$ | 13.7 | 13.7 | 13.7 | 13.7 | 13.7 | 13.7 | 13.7 | 13.7 |
| $K_2O$ | 0.9 | 0.9 | 0.9 | 0.9 | 0.9 | 0.9 | 0.9 | 0.9 |
| $B_2O_3$ | — | — | — | — | — | — | — | — |
| $T\text{-}Fe_2O_3$ | 1.2 | 1.4 | 1.7 | 1.3 | 1.3 | 1.4 | 1.3 | 1.3 |
| $FeO/T\text{-}Fe_2O_3$ | 0.24 | 0.21 | 0.19 | 0.19 | 0.16 | 0.17 | 0.17 | 0.17 |
| $CeO_2$ | — | — | — | 0.4 | — | — | — | — |
| $TiO_2$ | 0.03 | 0.03 | 0.03 | 0.03 | 0.50 | 0.03 | 0.03 | 0.03 |
| Se (ppm) | 3 | — | — | — | — | — | — | — |
| CoO (ppm) | 110 | 130 | 100 | 120 | 300 | 80 | 180 | 200 |
| NiO (ppm) | — | 390 | 250 | 300 | 600 | 1900 | 1050 | 1000 |
| YA | 37.9 | 35.4 | 37.4 | 38.3 | 18.7 | 17.7 | 20.2 | 19.9 |
| TG | 21.2 | 28.4 | 24.6 | 29.8 | 25.2 | 21.8 | 21.1 | 23.2 |
| Tuv (ISO) | 5.6 | 8.3 | 2.6 | 3.6 | 4.9 | 8.1 | 6.4 | 6.8 |
| dominant wavelength bw | 496 | 496 | 510 | 499 | 485 | 565 | 555 | 543 |
| excitation purity Pe | 5.9 | 6 | 4.7 | 5.3 | 16.1 | 22.9 | 9.7 | 5.9 |

[Table 4]

| Example | 28 | | 29 | | 30 | | 31 | | 32 | | 33 | |
|---|---|---|---|---|---|---|---|---|---|---|---|---|
| SiO₂ | 71 | | 71 | | 71 | | 71 | | 71 | | 71 | |
| Al₂O₃ | 1.6 | | 1.6 | | 1.6 | | 1.6 | | 1.6 | | 1.6 | |
| MgO | 3.6 | | 3.6 | | 3.6 | | 3.6 | | 3.6 | | 3.6 | |
| CaO | 7.7 | | 7.7 | | 7.7 | | 7.7 | | 7.7 | | 7.7 | |
| Na₂O | 13.7 | | 13.7 | | 13.7 | | 13.7 | | 13.7 | | 13.7 | |
| K₂O | 0.9 | | 0.9 | | 0.9 | | 0.9 | | 0.9 | | 0.9 | |
| B₂O₃ | — | | — | | — | | — | | — | | — | |
| NiO (ppm) | 330 | | 330 | | 330 | | 1000 | | 1000 | | 900 | |
| Se (ppm) | — | | — | | — | | — | | — | | — | |
| CoO (ppm) | 120 | | 125 | | 120 | | 190 | | 180 | | 190 | |
| TiO₂ | 0.03 | | 0.03 | | 0.03 | | 0.03 | | 0.03 | | 0.03 | |
| t-Fe₂O₃ | 1.3 | | 1.3 | | 1.3 | | 1.3 | | 1.3 | | 1.3 | |
| FeO/T-Fe₂O | 0.17 | | 0.17 | | 0.17 | | 0.16 | | 0.18 | | 0.19 | |
| | before | after | before | after | before | after | before | after | before | after | before | after |
| YA | 38.8 | 37.4 | 37.2 | 35.9 | 37.8 | 36.3 | 20.2 | 17.8 | 20.2 | 17.7 | 20.4 | 18.1 |
| TG | 31.4 | 31.2 | 30.5 | 30.5 | 30.3 | 29.9 | 21.7 | 21.2 | 20.3 | 19.7 | 19.8 | 19.3 |
| L* | 69.50 | 68.38 | 68.37 | 67.25 | 68.79 | 67.59 | 52.54 | 49.63 | 52.63 | 49.54 | 53.01 | 50.27 |
| a* | -9.47 | -8.31 | -9.45 | -8.32 | -9.48 | -8.36 | -9.10 | -6.27 | -9.39 | -6.25 | -9.64 | -6.76 |
| b* | 0.78 | 0.59 | 0.14 | 0.01 | -0.31 | -0.34 | 6.72 | 3.77 | 6.19 | 2.96 | 3.39 | 0.69 |
| dominant wavelength Dw | 498.9 | 498.5 | 496.9 | 496.5 | 495.8 | 495.5 | 550.3 | 542.4 | 545.9 | 529.1 | 514.9 | 499.5 |
| excitation purity Pe | 4.89 | 4.43 | 5.56 | 5.08 | 5.99 | 5.42 | 8.16 | 4.46 | 7.22 | 3.28 | 4.10 | 4.36 |
| Tuv (ISO) | 6.73 | 5.06 | 6.35 | 4.73 | 6.99 | 5.14 | 5.86 | 4.18 | 6.78 | 4.84 | 6.56 | 4.74 |

EP 0 825 156 B1

[Table 5]

| Comparative Example | 1 | 2 | 3 | 4 |
|---|---|---|---|---|
| $SiO_2$ | 71 | 71 | 72 | 66 |
| $Al_2O_3$ | 1.6 | 1.6 | 1.7 | 3.1 |
| MgO | 3.6 | 3.6 | 4.1 | 3.1 |
| CaO | 8.4 | 8.4 | 7.8 | 7.9 |
| $Na_2O$ | 13.1 | 13.1 | 13.5 | 17.8 |
| $K_2O$ | 0.9 | 0.9 | 0.5 | — |
| $B_2O_3$ | — | — | — | — |
| $T\text{-}Fe_2O_3$ | 1.4 | 1.0 | 1.4 | 1.5 |
| $FeO/T\text{-}Fe_2O_2$ | 0.61 | 0.21 | 0.17 | 0.18 |
| $CeO_2$ | — | — | — | — |
| $TiO_2$ | 0.03 | 0.03 | 0.1 | — |
| Se (ppm) | — | — | 43 | 40 |
| CoO (ppm) | 135 | 150 | 235 | 213 |
| NiO | 2200 | 300 | — | — |
| thickness (mm) | 4 | 4 | 5 | 3.9 |
| YA | 12.6 | 40.0 | 17.1 | 15.6 |
| TG | 7.2 | 33.1 | 16.6 | 16.7 |
| Tuv (ISO) | 8.8 | 21.7 | 2.5 | 4.7 |
| dominant wavelength Dw | 587 | 483 | 530 | 576 |
| excitation purity Pe | 18.0 | 20.5 | 3.9 | 8.9 |

## Claims

**1.** An ultraviolet/infrared absorbent low transmittance glass consisting of base glass comprising:

65 to 80 wt. % $SiO_2$;
0 to 5 wt. % $Al_2O_3$;
0 to 10 wt. % MgO:
5 to 15 wt. % CaO, wherein the total amount of MgO and CaO is 5 to 15 wt. %;
10 to 18 wt. % $Na_2O$;
0 to 5 wt. % $K_2O$, wherein the total amount of $Na_2O$ and $K_2O$ is 10 to 20 wt. %; and
0 to 5 wt. % $B_2O_3$,

and colorants comprising:

1.2 to 2.2 wt. total iron oxide ($T\text{-}Fe_2O_3$) converted to $Fe_2O_3$;
0.001 to 0.03 wt. % CoO; and one or both of
0.0001 to 0.0008% Se, and
0.003 to 0.2% NiO,

with the proviso that glasses with more than 1.0 to 3.0% $TiO_2$ are excluded.

**2.** An ultraviolet/infrared absorbent low transmittance glass as claimed in claim 1. wherein $T\text{-}Fe_2O_3$ is equal or greater than 1. 2 wt. % and less than 1.8 wt. %.

**3.** An ultraviolet/infrared absorbent low transmittance glass as claimed in claim 1. Therein $T\text{-}Fe_2O_3$ is between 1.8 wt. % and 2.2 wt. %.

12

4. An ultraviolet/infrared absorbent low transmittance glass as claimed in any of claims 1 to 3. wherein CoO is between 0.001 wt. % and 0.018 wt. %.

5. An ultraviolet/infrared absorbent low transmittance glass as claimed in any of claims 1 to 4, wherein Se is between 0.0001 wt.% and 0.0004 wt.%.

6. An ultraviolet/infrared absorbent low transmittance glass as claimed in any of claims 1 to 5, wherein NiO is equal or greater than 0.003 wt.% and less than 0.05 wt.%.

7. An ultraviolet/infrared absorbent low transmittance glass as claimed in claim 6, wherein NiO is between 0.05 wt. % and 0.2 wt.%.

8. An ultraviolet/infrared absorbent low transmittance glass as claimed in any of claims 1 to 7, wherein said colorant further comprises $CeO_2$ of no greater than 2.0 wt.%.

9. An ultraviolet/infrared absorbent low transmittance glass as claimed in any of claims 1 to 8, wherein the amount of FeO calculated as $Fe_2O_3$ is in the range from 15 to 40% of T-$Fe_2O_3$.

10. An ultraviolet/infrared absorbent low transmittance glass as claimed in any of claims 1 to 9, wherein a total solar energy transmittance (TG) of said glass is smaller than a visible light transmisttance (YA) by the C.I.E. illuminant A, and YA is in a range from 23% to 50% and TG is in a range from 7% to 35% at 4.0 mm thickness.

11. An ultraviolet/infrared absorbent low transmittance glass as claimed in claim 10, wherein YA is between 25% and 40% and TG is between 20% and 35%.

12. An ultraviolet/infrared absorbent low transmittance glass as claimed in claim 10 or 11, wherein the chromaticity, expressed by a* and b* under L* a* b* color system of the glass color are in ranges of -9<a*<-6 and -3<b*<3, respectively.

13. An ultraviolet/infrared low transmittance glass as claimed in any of claims 1 to 12, said glass has YA between 10% and 25% and TG between 10% and 35% at a thickness between 3.1 mm and 5 mm.

14. An ultraviolet/infrared absorbent low transmittance glass as claimed in claim 13, wherein the chromaticity, expressed by a* and b* under L* a* b* color system, of the glass color are in ranges of -7<a*<-2 and -3<b*<7, respectively.

15. An ultraviolet/infrared absorbent low transmittance glass as claimed in any of claims 1 to 14, wherein said glass has an ultraviolet transmittance, defined by ISO, of no greater than 6%.

16. An ultraviolet/infrared absorbent low transmittance glass as claimed in any of claims 1 to 15, wherein the dominant wavelength of the glass is in the range of 480 to 525 nanometers when the measurement is made based on a glass thickness of 4 mm using illuminatent C.

17. An ultraviolet/infrared absorbent low transmittance glass as claimed in any of claims 1 to 16, wherein the excitation purity of the glass is less than 11% when the measurement is made based on a glass thickness of 4 mm using illuminant C.

**Patentansprüche**

1. UV- und IR-Strahlung absorbierendes Glas mit einer geringen Durchlässigkeit, bestehend aus einem Basisglas, umfassend:

   65 bis 80 Gew.% $SiO_2$,
   0 bis 5 Gew.% $Al_2O_3$,
   0 bis 10 Gew.% MgO,
   5 bis 15 Gew.% CaO, wobei die Gesamtmenge an MgO und CaO im Bereich von 5 bis 15 Gew.% liegt,
   10 bis 18 Gew.% $Na_2O$,

0 bis 5 Gew.% $K_2O$, wobei die Gesamtmenge an $Na_2O$ und $K_2O$ im Bereich von 10 bis 20 Gew.% liegt, und 0 bis 5 Gew.% $B_2O_3$,
und Farbstoffen, umfassend:

1,2 bis 2,2 Gew.% Gesamteisenoxid (G-$Fe_2O_3$), bezogen auf $Fe_2O_3$,
0,001 bis 0,03 Gew.% CoO und
0,0001 bis 0,0008 % Se und/oder 0,003 bis 0,2 % NiO,
mit der Maßgabe, dass Gläser mit mehr als 1,0 bis 3,0 % $TiO_2$ ausgenommen
sind.

2. UV- und IR-Strahlung absorbierendes Glas mit einer geringen Durchlässigkeit nach Anspruch 1, wobei der Gehalt an G-$Fe_2O_3$ gleich oder größer als 1,2 Gew.% und kleiner als 1,8 Gew.% ist.

3. UV- und IR-Strahlung absorbierendes Glas mit einer geringen Durchlässigkeit nach Anspruch 1, wobei der Gehalt an G-$Fe_2O_3$ im Bereich von 1,8 Gew.% bis 2,2 Gew.% liegt.

4. UV- und IR-Strahlung absorbierendes Glas mit einer geringen Durchlässigkeit nach einem der Ansprüche 1 bis 3, wobei der Gehalt an CoO im Bereich von 0,001 Gew.% bis 0,018 Gew.% liegt.

5. UV- und IR-Strahlung absorbierendes Glas mit einer geringen Durchlässigkeit nach einem der Ansprüche 1 bis 4, wobei der Gehalt an Se im Bereich von 0,0001 Gew.% bis 0,0004 Gew.% liegt.

6. UV- und IR-Strahlung absorbierendes Glas mit einer geringen Durchlässigkeit nach einem der Ansprüche 1 bis 5, wobei der Gehalt an NiO gleich oder größer als 0,003 Gew.% und kleiner als 0,05 Gew.% ist.

7. UV- und IR-Strahlung absorbierendes Glas mit einer geringen Durchlässigkeit nach Anspruch 6, wobei der Gehalt an NiO im Bereich von 0,05 Gew.% bis 0,2 Gew.% liegt.

8. UV- und IR-Strahlung absorbierendes Glas mit einer geringen Durchlässigkeit nach einem der Ansprüche 1 bis 7, wobei der Farbstoff weiterhin $CeO_2$ in einer Menge von nicht mehr als 2,0 Gew.% umfasst.

9. UV- und IR-Strahlung absorbierendes Glas mit einer geringen Durchlässigkeit nach einem der Ansprüche 1 bis 8, wobei der Gehalt an FeO, bezogen auf $Fe_2O_3$, im Bereich von 15 bis 40 % des Gesamteisenoxids liegt.

10. UV- und IR-Strahlung absorbierendes Glas mit einer geringen Durchlässigkeit nach einem der Ansprüche 1 bis 9, wobei die Gesamtdurchlässigkeit des Glases für Sonnenenergie (TG) kleiner als die Durchlässigkeit für sichtbares Licht (YA) ist, bestimmt unter Verwendung des C.I.E.-Beleuchtungsmittels A, und wobei der YA-Wert im Bereich von 23 % bis 50 % und der TG-Wert im Bereich von 7 % bis 35 % liegt, bezogen auf eine Glasdicke von 4,0 mm.

11. UV- und IR-Strahlung absorbierendes Glas mit einer geringen Durchlässigkeit nach Anspruch 10, wobei der YA-Wert im Bereich von 25 % bis 40 % und der TG-Wert im Bereich von 20 % bis 35 % liegt.

12. UV- und IR-Strahlung absorbierendes Glas mit einer geringen Durchlässigkeit nach Anspruch 10 oder 11, wobei die Farbmesszahlen der Glasfarbe, dargestellt durch a* und b* im L*a*b*-Farbsystem, jeweils die Bedingungen -9<a*<-6 und -3<b*<3 erfüllen.

13. UV- und IR-Strahlung absorbierendes Glas mit einer geringen Durchlässigkeit nach einem der Ansprüche 1 bis 12, wobei der YA-Wert des Glases im Bereich von 10 % bis 25 % und der TG-Wert des Glases im Bereich von 10 % bis 35 % liegt, bezogen auf eine Glasdicke im Bereich von 3,1 mm bis 5 mm.

14. UV- und IR-Strahlung absorbierendes Glas mit einer geringen Durchlässigkeit nach Anspruch 13, wobei die Farbmesszahlen der Glasfarbe, dargestellt durch a* und b* im L*a*b*-Farbsystem, jeweils die Bedingungen -7 <a*< -2 und -3 < b* < 7 erfüllen.

15. UV- und IR-Strahlung absorbierendes Glas mit einer geringen Durchlässigkeit nach einem der Ansprüche 1 bis 14, wobei die UV-Durchlässigkeit des Glases, bestimmt entsprechend ISO, nicht größer als 6 % ist.

16. UV- und IR-Strahlung absorbierendes Glas mit einer geringen Durchlässigkeit nach einem der Ansprüche 1 bis 15, wobei die dominante Wellenlänge des Glases im Bereich von 480 bis 525 nm liegt, gemessen bei einer Glasdicke von 4 mm unter Verwendung des Beleuchtungsmittels C.

**17.** UV- und IR-Strahlung absorbierendes Glas mit einer geringen Durchlässigkeit nach einem der Ansprüche 1 bis 16, wobei der spektrale Farbanteil des Glases unterhalb von 11 % liegt, gemessen bei einer Glasdicke von 4 mm unter Verwendung des Beleuchtungsmittels C.

**Revendications**

**1.** Verre à faible transmittance absorbant l'ultraviolet/infrarouge, constitué par un verre de base comprenant :

65 à 80 % en poids de $SiO_2$ ;
0 à 5 % en poids de $Al_2O_3$ ;
0 à 10 % en poids de MgO ;
5 à 15 % en poids de CaO,
où la quantité totale de MgO et CaO est de 5 à 15 % en poids ;
10 à 18 % en poids de $Na_2O$ ;
0 à 5 % en poids de $K_2O$, où la quantité totale de $Na_2O$ et $K_2O$ est de 10 à 20 % en poids ; et
0 à 5 % en poids de $B_2O_3$,
et des colorants comprenant :

1,2 à 2,2 % en poids d'oxyde de fer total ($T$-$Fe_2O_3$) converti en $Fe_2O_3$ ;
0,001 à 0,03 % en poids de CoO ; et l'un ou l'autre ou les deux parmi
0,0001 à 0,0008 % de Se, et
0,003 à 0,2 % de NiO,
étant entendu que les verres ayant plus de 1,0 à 3,0 % de $TiO_2$ sont exclus.

**2.** Verre à faible transmittance absorbant l'ultraviolet/infrarouge selon la revendication 1, où $T$-$Fe_2O_3$ est égal ou supérieur à 1,2 % en poids et inférieur à 1,8 % en poids.

**3.** Verre à faible transmittance absorbant l'ultraviolet/infrarouge selon la revendication 1, où $T$-$Fe_2O_3$ est entre 1,8 % en poids et 2,2 % en poids.

**4.** Verre à faible transmittance absorbant l'ultraviolet/infrarouge selon l'une quelconque des revendications 1 à 3, dans lequel CoO est entre 0,001 % en poids et 0,018 % en poids.

**5.** Verre à faible transmittance absorbant l'ultraviolet/infrarouge selon l'une quelconque des revendications 1 à 4, dans lequel Se est entre 0,0001 % en poids et 0,0004 % en poids.

**6.** Verre à faible transmittance absorbant l'ultraviolet/infrarouge selon l'une quelconque des revendications 1 à 5, dans lequel NiO est égal ou supérieur à 0,003 % en poids et inférieur à 0,05 % en poids.

**7.** Verre à faible transmittance absorbant l'ultraviolet/infrarouge selon la revendication 6, dans lequel NiO est entre 0,05 % en poids et 0,2 % en poids.

**8.** Verre à faible transmittance absorbant l'ultraviolet/infrarouge selon l'une quelconque des revendications 1 à 7, dans lequel ledit colorant comprend en outre $CeO_2$ à pas plus de 2,0 % en poids.

**9.** Verre à faible transmittance absorbant l'ultraviolet/infrarouge selon l'une quelconque des revendications 1 à 8, dans lequel la quantité de FeO calculée en $Fe_2O_3$ est dans la gamme de 15 à 40 % de $T$-$Fe_2O_3$.

**10.** Verre à faible transmittance absorbant l'ultraviolet/infrarouge selon l'une quelconque des revendications 1 à 9, dans lequel la transmittance totale d'énergie solaire (TG) dudit verre est inférieure à la transmittance de lumière visible (YA) lorsqu'elle est mesurée par l'illuminant A C.I.E., et YA est dans la gamme de 23 % à 50 % et TG est dans la gamme de 7 % à 35 % à une épaisseur de 4,0 mm.

**11.** Verre à faible transmittance absorbant l'ultraviolet/infrarouge selon la revendication 10, dans lequel YA est entre 25 % et 40 % et TG est entre 20 % et 35 %.

**12.** Verre à faible transmittance absorbant l'ultraviolet/infrarouge selon la revendication 10 ou 11, dans lequel la chromaticité, exprimée par $a^*$ et $b^*$ sous le système de couleur $L^*a^*b$, de la couleur du verre est dans les gammes de $-9 < a^* < -6$ et $-3 < b^* < 3$, respectivement.

**13.** Verre à faible transmittance absorbant l'ultraviolet/infrarouge selon l'une quelconque des revendications 1 à 12, dans lequel ledit verre a YA entre 10 % et 25 % et TG entre 10 % et 35 % à une épaisseur entre 3,1 mm et 5 mm.

**14.** Verre à faible transmittance absorbant l'ultraviolet/infrarouge selon la revendication 13, dans lequel la chromaticité, exprimée par $a^*$ et $b^*$ sous le système de couleur $L^*a^*b^*$, de la couleur du verre est dans les gammes de $-7 < a^* < -2$ et $-3 < b^* < 7$, respectivement.

**15.** Verre à faible transmittance absorbant l'ultraviolet/infrarouge selon l'une quelconque des revendications 1 à 14, ledit verre ayant une transmittance d'ultraviolet, définie par ISO, non supérieure à 6 %.

**16.** Verre à faible transmittance absorbant l'ultraviolet/infrarouge selon l'une quelconque des revendications 1 à 15, dans lequel la longueur d'onde dominante du verre est dans la gamme de 480 à 525 nm lorsque la mesure est effectuée sur la base d'une épaisseur de verre de 4 mm en utilisant l'illuminant C.

**17.** Verre à faible transmittance absorbant l'ultraviolet/infrarouge selon l'une quelconque des revendications 1 à 16, dans lequel la pureté d'excitation du verre est inférieure à 11 % lorsque la mesure est effectuée sur la base d'une épaisseur de verre de 4 mm en utilisant l'illuminant C.

*Fig. 1.*